# EUROPEAN PATENT SPECIFICATION

(11) **EP 1 760 591 B1**
(45) Date of publication and mention of the grant of the patent: **11.03.2009**
(21) Application number: 06250804.9
(22) Date of filing: 15.02.2006
(51) Int. Cl.: G06F 11/20, G06F 11/00, H04L 12/24

(54) **System and method of managing access path**
System und Verfahren zur Zugriffspfadverwaltung
Système et procédé de gestion d'un chemin d'accès

(30) Priority: 05.09.2005 JP 2005256373
(43) Date of publication of application: 07.03.2007
(73) Proprietor: Hitachi, Ltd., Tokyo 100-8280 (JP)
(72) Inventor: Shimozono, Norio, Tokyo 100-8220 (JP)
(74) Representative: Hodsdon, Stephen James

(56) References cited:
- US-A- 5 435 003
- US-A1- 2003 172 331
- US-A1- 2004 024 870

## Description

The present invention relates to technologies of managing access paths in storage area networks and, more particularly, to an access path management system and a method of managing an access path, which are capable of resolving port errors of storage apparatuses and performance overload of the ports of the storage apparatuses.

Computer systems in corporations have installed various application programs along with progress in Information Technology (IT) and popularization of the Internet and, thus, demand for high reliability is increasingly growing. Particularly, storage systems storing a large amount of data processed by the application programs have become important in the computer systems and extremely high reliability is demanded of the storage systems. In addition, a reduction in the operation and management costs of the storage systems presents a challenge as the importance of the storage systems in the computer systems increases.

Configurations in which host computers are connected to the large storage systems, which are expensive but have higher reliability, via storage area networks (SANs) are frequently adopted against such a challenge. However, there is a problem of how to address failures in the SANs.

In order to resolve such a problem, technologies in which software called multipath drivers, running on the host computers, accesses the storages systems through multiple access paths to conceal path errors from file systems or higher-level application are widely known. For example, a technology of resolving a bottleneck in the SAN and changing the access path to a host computer is disclosed in Japanese Unexamined Patent Application Publication No. 2004-72135.

Although the large storage systems are capable of providing many ports, a difference can arise between an expansion unit of the ports and the number of ports required by the computer systems, thus decreasing the utilization efficiency of the ports.

Methods of making access paths redundant by using multipath drivers in related arts have a problem of reducing the path redundancy after a path error has occurred before the access path has recovered by a maintenance operation.
In order to keep the path redundant if the path error has occurred, it is necessary to set in advance three or more paths in the related arts. As a result, a larger number of ports occupied in devices, such as switches, in the SAN are accompanied by an increase in the cost.

US 2004/024870A discloses a storage network system which includes computers, storage systems, connection devices that control connection relations between the computers and the storage system, and a managing device that manages the computers, the storage system and the connection devices. The managing device includes a control section that specifies connection ports of the computers, the storage system and the connection devices that compose the storage network system. Further, the control device of the managing device displays on a display section a data traffic amount at each of the connection ports for each connection path from the computer to the storage system.

US 5,435,003 discloses restoration of connections by a distributed restoration process in a fully or partly meshed communications network of nodes, the restoration method comprising the steps of responding at a first end node of a path in the network to receipt of an indication that the path has failed to retrieve the identity of one or more nodes stored in the first end node in association with the identity of the path and constituting a stored restoration path for the path, sending a connection signature to the node at the other end of the path via the stored restoration path, responding at the other end node to receipt of a connection signature to send a confirmation signature to confirm establishment of the stored restoration path, broadcasting from the first end node in response to the receipt of the indication a path-finder signature to find a restoration path for the failed path by real-time restoration process, sending from the other node a real-time restoration path confirmation signature identifying a real-time restoration path selected by the other end node from one or more received path-finder signatures, and in the first end node switching traffic data for the other end node from the failed path to either the stored restoration path or the selected real-time restoration path, depending upon which confirmation signature is first received at the node.

According to an embodiment of the present invention, a computer system includes at least one host computer; at least storage apparatus providing a logical storage area for the host computer; and a management computer connected to the host computer and the storage apparatus via a network, characterized in that: when the management computer receives a notification of a performance overload or a port error from the host computer or the storage apparatus, the management computer copies the path setting of the failure port into a shared port of the storage system, and instructs that a new path definition is set for the host computer and the storage apparatus, wherein: when the management computer receives a notification of port overload from the host computer or the storage apparatus, the management computer instructs that a new access path through a shared port of the storage apparatus is set for the host computer and the storage apparatus in order to avoid the port overload; and when the management computer receives a notification of a path error from the host computer or the storage apparatus, the management computer confirms an attribute of a shared port of the storage apparatus, changes the attribute of the shared port used in port overload, and instructs that a new access path through the shared port is set for the host computer and the storage apparatus in order to recover from the path error.

A method according to the invention being defined in detail in the appended independent claim 6.

According to the present invention, it is possible to automatically recover from a state in which the redundancy of an access path is lost due to a port error in a computer system to the redundant state of the access path.

### BRIEF DESCRIPTION OF THE DRAWINGS

Fig. 1 shows an exemplary structure of a computer system according to a first embodiment of the present invention;
Fig. 2 shows an exemplary hardware structure of a storage system according to the first embodiment of the present invention;
Fig. 3 shows an exemplary software configuration of the storage system according to the first embodiment of the present invention;
Fig. 4 shows an exemplary structure of a storage port status table according to the first embodiment of the present invention;
Fig. 5 shows an exemplary structure of an LU configuration table according to the first embodiment of the present invention;
Fig. 6 shows an exemplary hardware structure of a host according to the first embodiment of the present invention;
Fig. 7 shows an exemplary software configuration of the host according to the first embodiment of the present invention;
Figs. 8A to 8C show exemplary structures of tables held by the host, according to the first embodiment of the present invention;
Fig. 9 shows an exemplary hardware structure of an SAN management computer according to the first embodiment of the present invention;
Fig. 10 shows an exemplary software configuration of the SAN management computer according to the first embodiment of the present invention;
Fig. 11 shows an exemplary structure of a node configuration table according to the first embodiment of the present invention;
Fig. 12 shows a process flow of an automatic path switching subprogram according to the first embodiment of the present invention;
Fig. 13 is a ladder chart showing a process flow of restoring a path error according to the first embodiment of the present invention;
Fig. 14 is a flowchart showing a maintenance operation according to a second embodiment of the present invention;
Fig. 15 shows an exemplary software configuration of a storage system according to a third embodiment of the present invention; and
Fig. 16 is a flowchart showing a process flow of an automatic path switching subprogram according to the third embodiment of the present invention.

Embodiments of the present invention will be described below.

According to the embodiments of the present invention, redundant ports in a storage system are usually used for load sharing for offloading access to overloaded ports of the storage system while the redundant ports in the storage system are used as alternate ports of the overloaded ports upon occurrence of a port error in the storage system to build a management system capable of effectively using the redundant ports for improving the performance and the reliability.

Specifically, a SAN management server that always communicates with a host and a storage system is provided in order to monitor the access status. At least one redundant port or shared port whose settings can be dynamically changed is provided in the storage system.

When the SAN management server is notified of performance overload or a port error by the host or the storage system, the SAN management server copies the path setting of the failure port into the shared port of the storage system. This copying allows the storage system to access the failure volume through the shared port.

The SAN management server requests the host to change the setting of the access path and enables the access path to the shared port to start access through the shared port.

A computer system, a management computer, and a method of managing an access path, according to embodiments of the present invention, will be described with reference to the attached drawings.

### First Embodiment

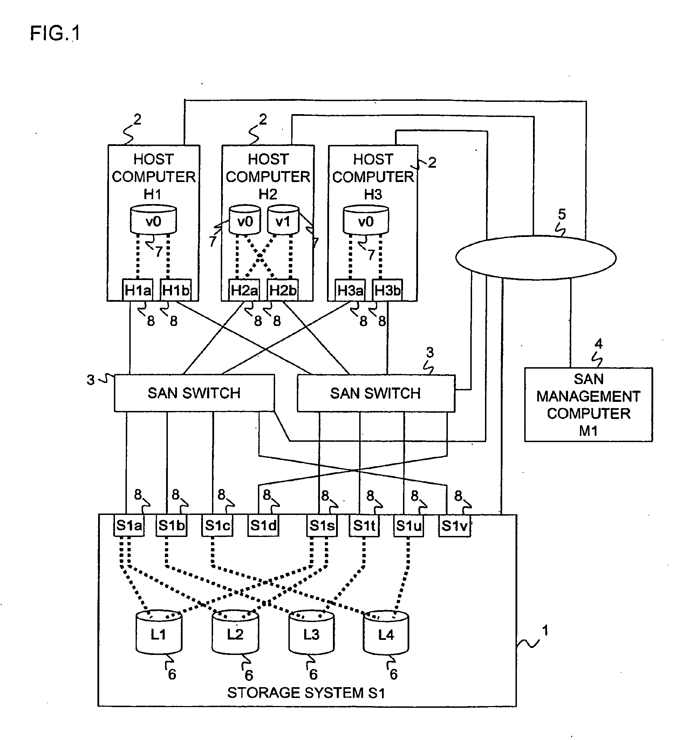

A first embodiment of the present invention will be described. Fig. 1 shows an exemplary structure of a computer system according to the first embodiment of the present invention. Referring to Fig. 1, the computer system includes a storage system 1 including at least one storage apparatus, at least one host computer (hereinafter referred to as hosts) 2, and a SAN management computer (hereinafter referred to as a management server) 4.

The storage system 1 and each of the hosts 2 have at least one SAN port 8 that are connected to SAN switches 3 to form a SAN. The SAN ports 8 are connected to the SAN via, for example, an interface called Fibre Channel. The hosts 2 transmit and receive commands and data to and from the storage system 1 by using a protocol called Fibre Channel protocol (FCP) (the storage system 1 is hereinafter also referred to as a "node" and the hosts 2 are hereinafter also collectively referred to as a "node").

The storage system 1, the SAN switches 3, the hosts 2, and the management server 4 are connected to each other via a local area network (LAN) 5.

The kinds of the interface and the protocol used in the SAN over which the storage system 1 communicates with the hosts 2 are not limited in the first embodiment. For example, the Ethernet® and the iSCSI may be used as the interface and the protocol used in the SAN. Although the storage system 1 is connected to the management server 4 via the LAN in the structure described above, another network may be used.

Each of the hosts 2 is a computer that executes an application program, such as a database, to input and output data required for the processing in and from the storage system 1.

The storage system 1 provides at least one logical storage area (hereinafter also referred to as "logical volume" or "LVOL") 6 for the host 2.

When the host 2 transmits a Small Computer System Interface (SCSI) command to the storage system 1, the storage system 1 transfers data to the host 2 in accordance with the SCSI command. For example, when the FCP is used, the host 2 adds a port address for specifying the SAN port 8 of the storage system 1 and a logical unit number (LUN) to the header of the command and issues the command having the port address and the LUN added thereto to the storage system 1 to specify the logical volume 6. The command further includes a command code indicating a type of the command, for example, "read" or "write", an address or a transfer length indicating the transfer start position in the logical volume 6, and so on.

When the storage system 1 receives the SCSI command, the storage system 1 identifies the SAN port 8 on the basis of setting information and the logical volume 6 on the basis of the LUN, and performs the data transfer. At least one logical volume 6 is not necessarily set for the SAN port 8, and at least one unused SAN port 8 having no logical volume 6 that is set is provided at the initial setup in the first embodiment. "S1d" and "S1v" are the unused SAN ports 8 in Fig. 1.

In order to improve the reliability of the SAN, the host 2 is connected to the storage system 1 via the multiple SAN ports 8 and the SAN switches 3, as shown in Fig. 1, and a plurality of combinations of the SAN port 8 and the LUN is associated with the same logical volume 6 to make the access path from the host 2 to the logical volume 6 redundant.

The host 2 manages the storage area in units of host volume (hereinafter also referred to as "HVOL") 7 in order to virtualize an access path (a combination of the port address and the LUN) to the redundant logical volume 6. The host 2 manages the correspondence between the access path to the host volume 7 and that to the logical volume 6 by using an access control driver 182 described below. When an application program accesses the host volume 7, the access control driver 182 transmits the SCSI command for the corresponding logical volume 6 to the storage system 1.

According to the first embodiment, if the redundancy of the access path between the host 2 and the logical volume 6 is lost due to an occurrence of an error in the SAN port 8 of the storage system 1, the host 2 and the storage system 1 notify the management server 4 of the error and the management server 4, which has received the notification, sets a new access path using the unused SAN port 8 of the storage system 1 for the host 2 and the storage system 1 to indicate that the redundancy of the access path can be quickly recovered.

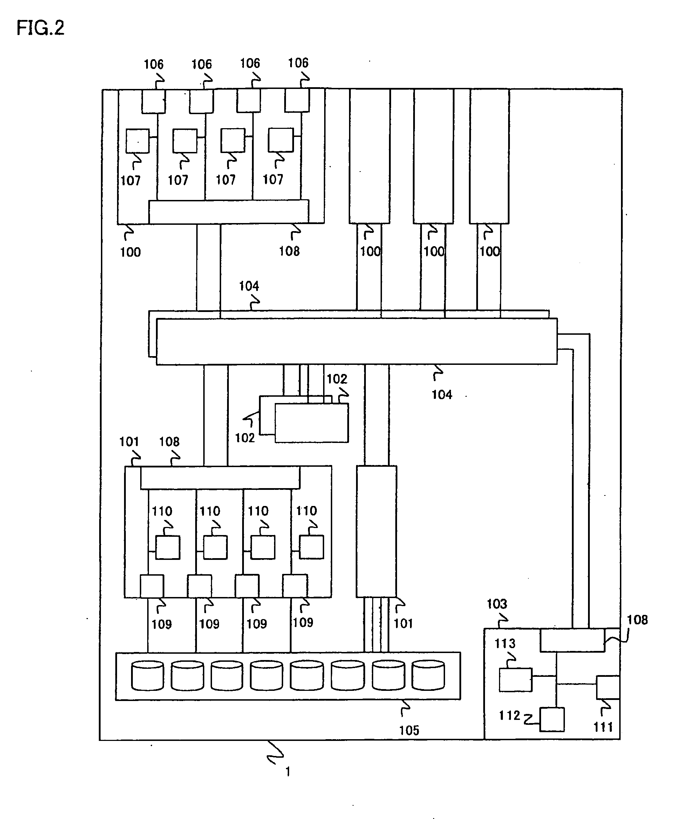

Fig. 2 shows an exemplary hardware structure of the storage system 1. The storage system 1 includes a plurality of host interface units 100, a plurality of disk interface units 101, a shared memory 102, a system management unit 103, and a switch unit 104 connecting the above components. The storage system 1 is connected to a hard disk group 105 via the disk interface units 101.

The hard disk group 105 stores data concerning the logical volume 6 and includes a plurality of hard disks.

The host interface units 100 are components connecting the storage system 1 to the SAN. Each of the host interface units 100 includes a plurality of external interface 106, port processors 107, and a data transfer control unit 108 connecting the external interfaces 106 and the port processors 107 to the switch unit 104.

Each of the external interfaces 106 includes the SAN port 8 used for connecting the storage system 1 to the SAN and controls the protocol for the SAN. The logical volume 6 is formed of one or more hard disks included in the hard disk group 105.

Each of the port processor 107 analyzes the SCSI command transmitted from the host 2 to perform processing required for execution of the SCSI command.

The data transfer control unit 108 accesses the switch unit 104 to control data transfer and communication between the external interfaces 106 and the port processors 107, and the shared memory 102, the disk interface units 101, and the system management unit 103.

The disk interface units 101 are components connecting the storage system 1 to the hard disk group 105. Each of the disk interface units 101 includes disk interfaces 109, disk processors 110, and a data transfer control unit 108 connecting the disk interfaces 109 and the disk processors 110 to the switch unit 104. The disk interface units 101 connect the storage system 1 to the hard disk group 105 to control the protocol used for communication with the hard disk group 105.

The disk processors 110 communicate with the port processors 107 to control the data transfer between the hard disk group 105 and the shared memory 102, required for processing the SCSI command.

The system management unit 103 is a component connecting the storage system 1 to the LAN 5. The system management unit 103 includes a management interface 111, a management processor 112, a non-volatile memory 113, and a data transfer control unit 108.

The management interface 111 connects the storage system 1 to the LAN 5 to control the protocol of the LAN 5. For example, the management interface 111 is a network interface card (NIC) for the Ethernet®.

The management processor 112 communicates with the management server 4 to execute the setting of the storage system 1.

The non-volatile memory 113 holds the setting information concerning the storage system 1.

The hardware structure of the storage system 1 according to the first embodiment is an only example. The storage system 1 is not limited to the above structure as long as the storage system 1 includes a plurality of SAN ports 8 and a plurality of logical volumes 6.

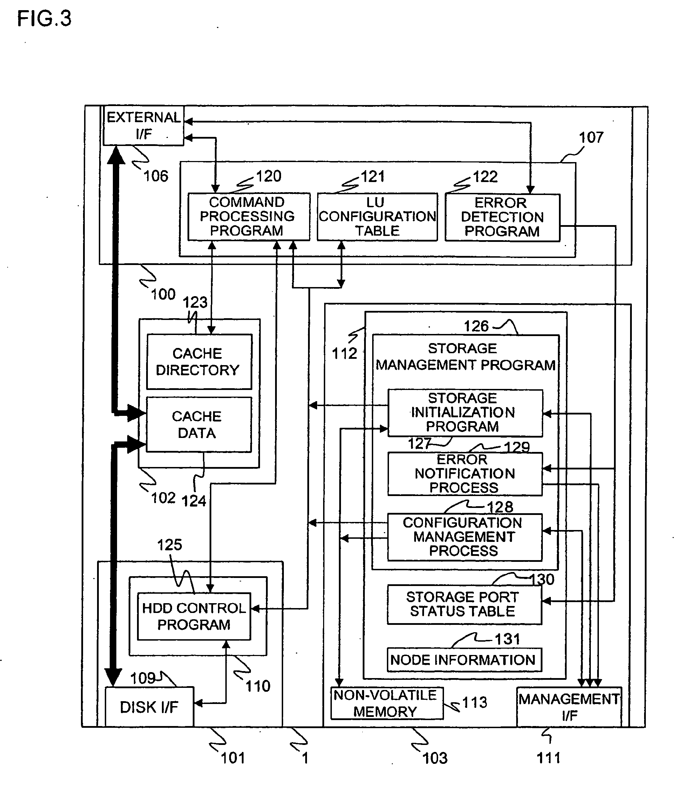

Fig. 3 shows an exemplary software configuration of the storage system 1. First, processing performed by each component and data held by each component will be described. The port processor 107 holds a logical unit (LU) configuration table 121 and executes a command processing program 120 and an error detection program 122. The LU configuration table 121 holds the correspondence between pairs of the SAN port 8 and the LUN and the logical volumes 6. The command processing program 120 executes the SCSI command received from the host 2. The error detection program 122 detects any error of the external interface 106 and the port processor 107.

The shared memory 102 holds cache data 124 including part of the data concerning the logical volume 6 and a cache directory 123 associating the cache data 124 with positions in the logical volume 6.

The disk processor 110 executes a hard disk drive (HDD) control program 125. The HDD control program 125 is invoked in response to an instruction supplied from the corresponding port processor 107, issues a command to the hard disk group 105, and performs data transfer to the cache data 124. The HDD control program 125 performs redundant array of inexpensive disks (RAID) processing by using the multiple hard disks in the hard disk group 105. Specifically, the HDD control program 125 manages the correspondence between an address space in the logical volume 6 and an address space in the hard disk group 105 and accesses an appropriate hard disk. The HDD control program 125 also continues the access by using the redundant hard disk upon occurrence of an error in the hard disk.

The management processor 112 holds a storage port status table 130 and node information 131 and executes a storage management program 126.

The storage port status table 130 is a table used for managing the status of each SAN port 8 of the storage system 1. The node information 131 is data indicating management information concerning the storage system 1 and the network address of the management server 4 in the LAN 5.

The storage management program 126 performs a storage initialization program 127 for initializing the storage system 1, an error notification process 129 for notifying the management server 4 of an error, and a configuration management process 128 for acquiring or changing the configuration information concerning the storage system 1 in response to a request from the management server 4.

Initialization of the storage system 1 will now be described. After the storage system 1 is invoked, the management processor 112 invokes the storage management program 126 to perform the storage initialization program 127.

In the storage initialization program 127, the management processor 112 reads out the setting information from the non-volatile memory 113, sets the LU configuration table 121 and the node information 131 in the port processor 107 and the management processor 112, loads the command processing program 120, the error detection program 122, and the HDD control program 125 in the port processor 107 and the disk processor 110, and initializes the storage port status table 130.

The command processing program 120 logs in the management server 4 via the management interface 111 and registers the node information 131 in the management server 4.

After the command processing program 120 and the error detection program 122 are invoked, the port processor 107 initializes the external interface 106 and the cache directory 123, updates the storage port status table 130 to the current status, and waits for the SCSI command from the host 2.

After the HDD control program 125 is invoked, the disk processors 110 initializes the disk interface 109, confirms whether the disk processors 110 can access the hard disk group 105, and waits for an instruction from the port processor 107 to complete the initialization.

A process flow in which the storage system 1 executes the SCSI command transmitted from the host 2 will now be described. When the external interface 106 receives the SCSI command from the host 2, the external interface 106 notifies the port processor 107 of the content of the SCSI command. The port processor 107 periodically polls the notification from the external interface 106. When the port processor 107 detects the notification of the SCSI command, the port processor 107 executes the command processing program 120.

In the command processing program 120, the port processor 107 determines the logical volume 6 to be accessed from the LU configuration table 121 by using the LUN specified by the SCSI command as a key.

The port processor 107 accesses the cache directory 123 in the shared memory 102 and determines a cache hit or a cache miss. If the data requested by the host 2 is a cache hit, the port processor 107 instructs the external interface 106 to transfer the cache data 124 to the host 2. If the data requested by the host 2 is a cache miss, the port processor 107 performs the following processing.

In case of a "read" command, the port processor 107 instructs the disk processors 110 to transfer the cache data 124 to the hard disk group 105 and, after the data transfer is completed, updates the cache directory 123 and instructs the external interface 106 to transfer the data to the host 2.

In case of a "write" command, the port processor 107 accesses the cache directory 123 and allocates a free space to the cache data 124. The port processor 107 then instructs the external interface 106 to perform the data transfer between the space allocated to the cache data 124 and the host 2 and, after the data transfer is completed, updates the cache directory 123. The port processor 107 periodically instructs the disk processor 110 to transfer the cache data 124 to the hard disk group 105 and writes dirty "write" data registered in the cache directory 123 into the hard disk group 105.

The storage system 1 executes the SCSI command transmitted from the host 2 in the manner described above. However, the above process flow is an example and the process flow is not limited to the above one as long as the logical volume 6 can be determined based on the LUN of the SCSI command and the setting information to perform the data transfer.

A method of setting the storage system 1 will now be described. When the management processor 112 receives a request from the management server 4 through the management interface 111, the management processor 112 performs the configuration management process 128.

In the configuration management process 128, the management processor 112 first determines a type of the request from the management server 4.

If a request to acquire the configuration information is submitted from the management server 4, the management processor 112 acquires the LU configuration table 121, the storage port status table 130, and the node information 131, specified in the request, from the port processor 107 and the management processor 112 and transmits the acquired LU configuration table 121, storage port status table 130, and node information 131 to the management server 4 through the management interface 111.

If a request to change the configuration is submitted from the management server 4, the management processor 112 changes the LU configuration table 121, the storage port status table 130, and the node information 131, specified in the request, in the port processor 107, the management processor 112, and the non-volatile memory 113 and notifies the management server 4 of the completion of the change through the management interface 111.

A notification process of an error in the storage system 1 will now be described. The port processor 107 executes the error detection program 122 at predetermined intervals.

In the error detection program 122, the port processor 107 monitors the statuses of the external interface 106 and other port processors 107 to update the storage port status table 130 to the current status. If the port processor 107 detects an error, the port processor 107 notifies the management processor 112 of the error.

The management processor 112 processes the error notification from the port processor 107 in the error notification process 129. Specifically, the management processor 112 updates the storage port status table 130 and notifies the management server 4 of a part where the error has occurred through the management interface 111.

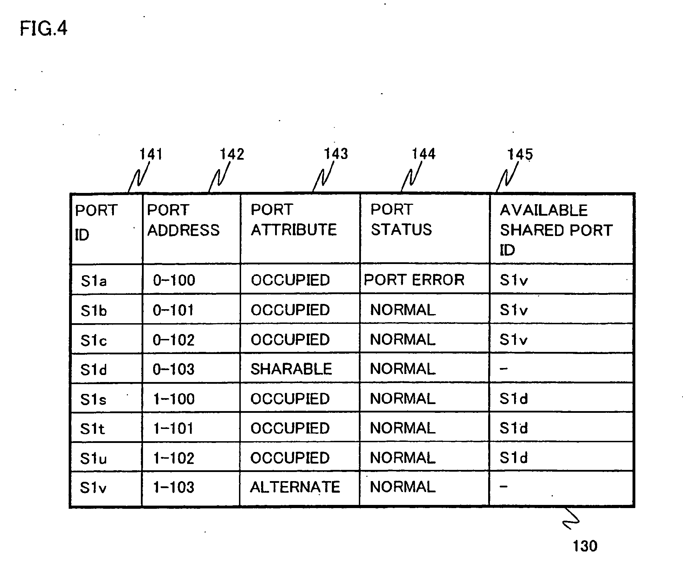

Fig. 4 shows an exemplary structure of the storage port status table 130. The storage port status table 130 has a plurality of entries corresponding to the SAN ports 8 in the storage system 1. Each entry has a port identification (ID) 141, a port address 142, a port attribute 143, a port status 144, and an available shared port ID 145 of the storage system 1.

The port ID 141 is used for identifying the SAN port 8 of the storage system 1 and is set by the management server 4.

The port address 142 indicates a port address of the SAN port 8 in the SAN and is determined in the protocol processing, for example, upon initialization of the external interface 106. The management server 4 may specify the port address 142 and the specified value may be used to initialize the external interface 106.

The port attribute 143 indicates an attribute of the SAN port 8. According to the first embodiment of the present invention, when an "occupied" attribute is set, a dynamic addition of the logical volume 6 corresponding to the SAN port 8 to the LU configuration table 121 is not permitted. When a "sharable" attribute is set, a dynamic addition of the logical volume 6 corresponding to the SAN port 8 to the LU configuration table 121 is permitted. When an "alternate" attribute is set, a dynamic addition of the logical volume 6 corresponding to the SAN port 8 to the LU configuration table 121 is set by the management server 4. Specifically, the "alternate" attribute indicates that the SAN port 8 inherits the access path to the logical volume 6 corresponding to the SAN port 8 where the error has occurred and becomes active.

The port attribute 143 is set by the management server 4 and is recorded in the non-volatile memory 113. A port having the "occupied" attribute is hereinafter referred to as an occupied port and a port having the "sharable" attribute is hereinafter referred to as a sharable port.

The port status 144 indicates a status of the SAN port 8. The port status 144 being set to "normal" indicates that the SAN port 8 normally operates. The port status 144 being set to "port error" indicates that an error has occurred at the SAN port 8 and the SAN port 8 is disabled. The port status 144 is kept up to date by the port processor 107 that executes the error detection program 122 at predetermined intervals.

The available shared port ID 145 is information specifying the port ID 141 of the SAN port 8 that inherits the setting in the LU configuration table 121 with regard to the SAN port 8 upon occurrence of an error and becomes active. The available shared port ID 145 is set by the management server 4.

Fig. 4 shows a state in which "S1d" and "S1v", which are unused in Fig. 1, are used as the shared ports and are specified in the available shared port ID 145. In addition, an error has occurred at the SAN port 8 "S1a" and the management server 4 causes the SAN port 8 "S1v" to automatically inherit the setting in the LU configuration table 121 with regard to the SAN port 8 "S1a".

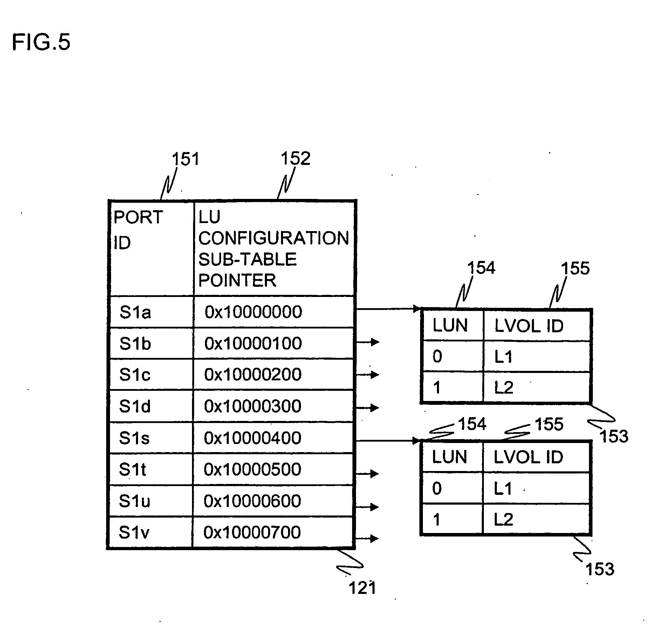

Fig. 5 shows an exemplary structure of the LU configuration table 121. The LU configuration table 121 has a plurality of entries corresponding to the SAN ports 8 in the storage system 1. Each entry has a port ID 151 and an LU configuration sub-table pointer 152 to an LU configuration table 153 holding the correspondence between the LUN of the SAN port 8 and the logical volume 6.

The LU configuration table 153, which holds the correspondence between the LUN of the SAN port 8 and the logical volume 6, has entries each having an LUN 154 and a logical volume ID (LVOL ID) 155 corresponding to the LUN 154.

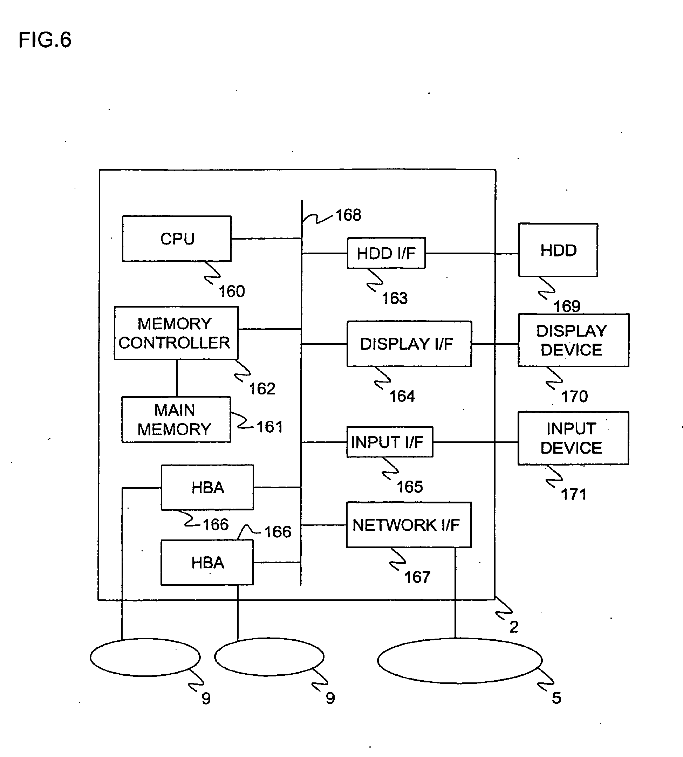

Fig. 6 shows an exemplary hardware structure of the host 2. The host 2 includes a CPU 160, a main memory 161, a memory controller 162 controlling the main memory 161, an HDD interface 163, a display interface 164, an input interface 165, at least one host bus adapter (HBA) 166, a network interface 167, and a bus 168 connecting the above components.

The CPU 160 executes various programs described below. The main memory 161 holds data required for executing the programs. The memory controller 162 controls the main memory 161 and is connected to the bus 168.

The HDD interface 163 is a component connecting an HDD 169 to the bus 168.

The display interface 164 is a component connecting a display device 170 to the bus 168.

The input interface 165 is a component connecting an input device 171 including a keyboard and a mouse to the bus 168.

The HBA 166 includes the SAN port 8 and are components connecting the bus 168 to a SAN 9.

The network interface 167 is a component connecting the bus 168 to the LAN 5.

The hardware structure of the host 2 according to the first embodiment is an only example. The host 2 is not limited to the above structure as long as the host 2 includes at least one SAN port 8 and an interface to the LAN 5 and is capable of executing software described below.

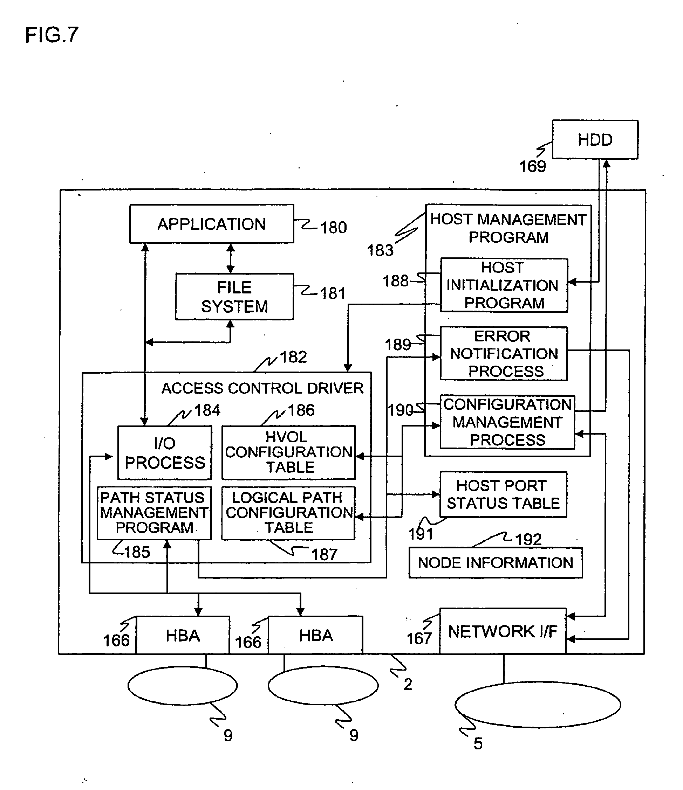

Fig. 7 shows an exemplary software configuration of the host 2. A process performed by the CPU 160 in the host 2 and data held in the main memory 161 in the host 2 will now be described.

The CPU 160 in the host 2 executes an application program 180, a file system 181, an access control driver 182, and a host management program 183. More specifically, the access control driver 182 performs an I/O process 184 and a path status management program 185, and the host management program 183 performs a host initialization program 188, an error notification process 189, and a configuration management process 190.

Data used by these programs is held in the main memory 161. Specifically, the main memory 161 holds an HVOL configuration table (hereinafter also referred to as "HVOL configuration table) 186, a logical path configuration table 187, a host port status table 191, and node information 192.

The HVOL configuration table 186 is a table used for managing the correspondence between the access path to the host volume 7 and the access path to the logical volume 6.

The logical path configuration table 187 is a table used for managing the access path to the logical volume 6 in a form of the logical path.

The host port status table 191 is a table used for managing the status of the SAN port 8 of the host 2.

Initialization of the host 2 will now be described. After the host 2 is invoked, the host 2 loads the host management program 183 from the HDD 169 and executes the loaded host management program 183. After the host management program 183 is invoked, the CPU 160 performs the host initialization program 188.

In the host initialization program 188, the CPU 160 loads the HVOL configuration table 186, the logical path configuration table 187, and the node information 192 from the HDD 169, initializes the host port status table 191, and invokes the access control driver 182.

The CPU 160 logs in the management server 4 via the display interface 164 and registers the node information 192 in the management server 4 to complete the initialization.

A process flow in which the application program 180 submits an access request to the host volume 7 will now be described. The application program 180 is a program, for example, a database, executed by the host 2. The application program 180 invokes the I/O process 184 in the access control driver 182 directly or via the file system 181 to request an access to the host volume 7. The file system 181 is a program converting the access to the file, requested by the application program 180, into the access to the host volume 7.

In the I/O process 184, the CPU 160 executes the access request to the host volume 7, received from the application program 180 or the file system 181. Specifically, the CPU 160 determines the access path to the logical volume 6, specifically, the port address and the LUN of the storage system 1, based on the HVOL configuration table 186 and the logical path configuration table 187, and issues a SCSI command to the storage system 1 through the HBA 166. When a plurality of access paths is set in the HVOL configuration table 186 and the logical path configuration table 187, the CPU 160 divides the access request among the access paths in the I/O process 184 to perform load sharing between the HBA 166, the SAN 9, and the SAN port 8 of the storage system 1. The access path is selected by, for example, round robin. After the data transfer to the storage system 1 is completed, the CPU 160 notifies the application program 180 or the file system 181 of the completion of the access in the I/O process 184.

The above process flow of the access request is an example and the process flow of the access request is not limited to the above one as long as the access path can be determined in response to the access request to the host volume 7 based on the setting information to access the logical volume 6 in the storage system 1.

A configuration management process in the host 2 will now be described. When the CPU 160 receives a configuration management request issued by the management server 4 through the network interface 167, the CPU 160 performs the configuration management process 190. In the configuration management process 190, the CPU 160 first determines a type of the request.

If the management server 4 submits a request to acquire configuration information, the CPU 160 transmits the HVOL configuration table 186, the logical path configuration table 187, the host port status table 191, and the node information 192 to the management server 4 through the network interface 167.

If the management server 4 submits a request to change the configuration, the CPU 160 changes the HVOL configuration table 186, the logical path configuration table 187, the host port status table 191, and the node information 192 in the main memory 161 and the HDD 169 in response to the request from the management server 4, and indicates the completion of the change to the management server 4 through the network interface 167.

A process flow in which the host 2 detects an error in the access path and notifies the management server 4 of the error will now be described. The CPU 160 performs the path status management program 185 at predetermined intervals. In this process flow, the CPU 160 determines whether the status of the access path to the logical volume 6 and the status of the SAN port 8 in the HBA 166 in the host 2, managed in the logical path configuration table 187, are normal. For example, the CPU 160 can issue a "read" command to an appropriate area in the logical volume 6 by using a certain access path to determine whether the status of the access path is normal. The CPU 160 can determine whether the status of the SAN port 8 of the host 2 is normal from the connection state between the HBA 166 and the SAN 9. After the CPU 160 determines the statuses of the access path and the SAN port 8 of the host 2, the CPU 160 updates the logical path configuration table 187 and the host port status table 191 to the current statuses. If the CPU 160 detects an error of the access path and/or the SAN port 8 of the host 2, the CPU 160 notifies the management server 4 of a part where the error has occurred through the network interface 167.

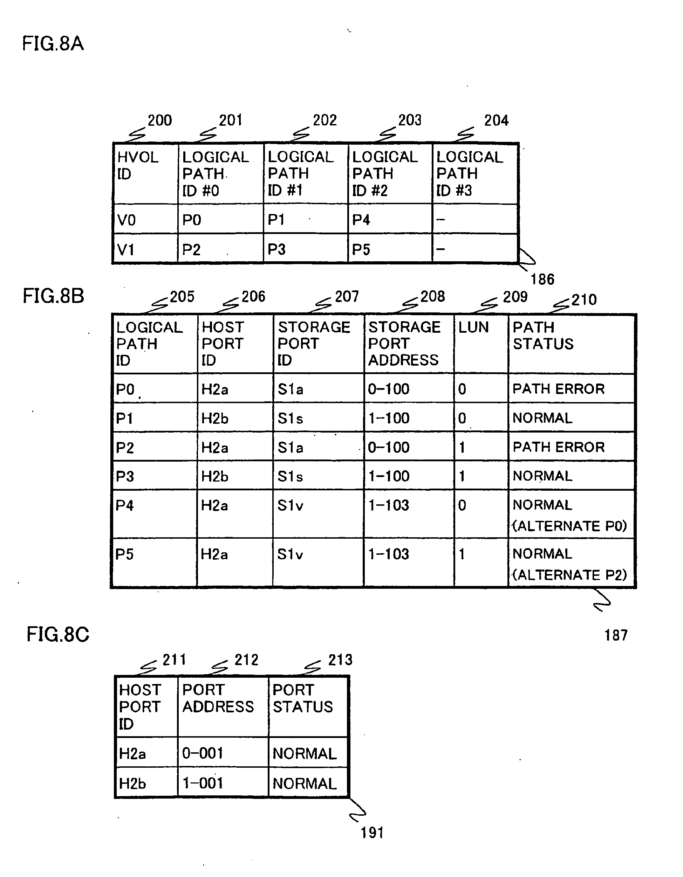

Figs. 8A to 8C show exemplary structures of the HVOL configuration table 186, the logical path configuration table 187, and the host port status table 191, respectively.

The HVOL configuration table 186 in Fig. 8A has a plurality of entries corresponding to the host volumes 7. Each entry has a host volume ID (hereinafter also referred to as "HVOLID") 200 and logical path IDs #0 201 to #3 204.

The HVOLID 200 identifies the host volume 7 and is set by the management server 4. The logical path IDs #0 201 to #3 204 indicate access paths to the logical volumes 6 corresponding to the host volumes 7 and are set by the management server 4. Although up to four logical path IDs can be registered in the first embodiment, it is sufficient to register two logical path IDs in order to set a redundant access path. The number of the logical path IDs is exemplified and there is no limit to the maximum number of the logical path IDs as long as the number exceeds two. Three or more access paths may usually be set in order to improve the performance.

The logical path configuration table 187 in Fig. 8B has a plurality of entries corresponding to the access paths to the logical volumes 6. Each entry has a logical path ID 205, a host port ID 206, a storage port ID 207, a storage port address 208, a LUN 209, and a path status 210.

The logical path ID 205 identifies the access path to the logical volume 6 and is set by the management server 4.

The host port ID 206 indicates a port address in the SAN 9, of the SAN port 8 of the host 2 used for accessing the logical volume 6. A value determined in the protocol processing in the initialization of the HBA 166 or a value set by the management server 4 is registered in the host port ID 206 during the execution of the host initialization program 188.

The storage port ID 207, the storage port address 208, and the LUN 209 indicate the access path used for transmitting the SCSI command to the logical volume 6, that is, the port ID, the port address, and the LUN of the SAN port 8 of the storage system 1, and are set by the management server 4.

The path status 210 indicates whether the access path is available. The path status 210 is updated to the current status, for example, by the CPU 160 that executes the path status management program 185 at predetermined intervals.

The host port status table 191 in Fig. 8C has a plurality of entries corresponding to the SAN ports 8 of the host 2. Each entry has a host port ID 211, a port address 212, and a port status 213.

The host port ID 211 identifies the SAN port 8 of the host 2 and is set by the management server 4.

The port address 212 indicates a port address in the SAN 9, of the SAN port 8. A value determined in the protocol processing in the initialization of the HBA 166 or a value set by the management server 4 is registered in the port address 212 during the execution of the host initialization program 188.

The port status 213 indicates a status of the SAN port 8. The port status 213 is updated to the current status, for example, by the CPU 160 that executes the path status management program 185 at predetermined intervals.

Figs. 8A to 8C show the settings in the host 2 shown by "H2" in Fig. 1. Specifically, a path error occurs in the logical paths "P0" and "P2" of the host volumes 7 "V0" and "V1" used by the host 2 "H2" due to the port error of the SAN port 8 "S1a" of the storage system 1 in Fig. 4.

Furthermore, a state in which the redundancy of the access paths to the host volumes 7 "V0" and "V1" is recovered by the management server 4 that sets the logical path using the SAN port 8 "S1v" in the logical path configuration table 187 and the HVOL configuration table 186 is shown in Figs. 8A to 8C.

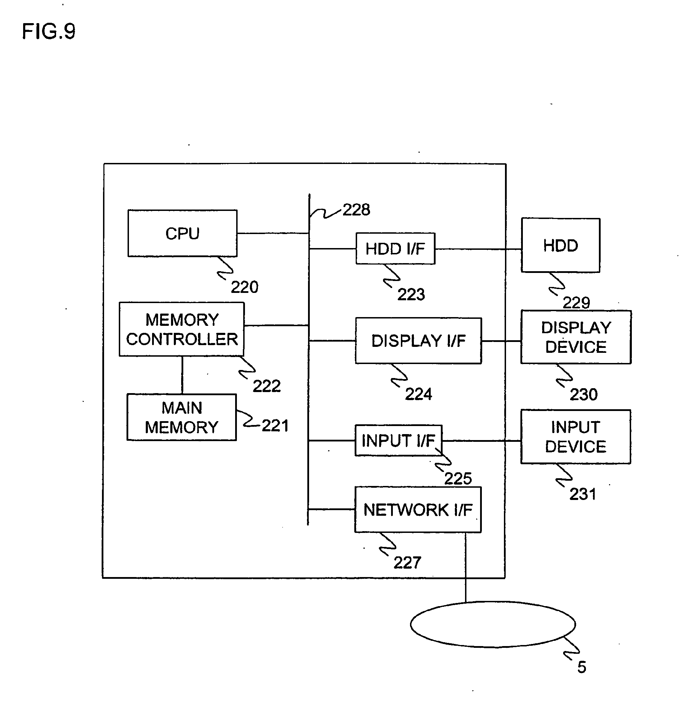

Fig. 9 shows an exemplary hardware structure of the management server 4. The management server 4 includes a CPU 220, a main memory 221, a memory controller 222 controlling the main memory 221, an HDD interface 223, a display interface 224, an input interface 225, a network interface 227, and a bus 228 connecting the above components to each other.

The CPU 220 executes various programs described below. The main memory 221 holds data required for executing the programs. The memory controller 222 controls the main memory 221 and is connected to the bus 228.

The HDD interface 223 is a component connecting an HDD 229 to the bus 228.

The display interface 224 is a component connecting a display device 230 to the bus 228.

The input interface 225 is a component connecting an input device 231 including a keyboard and a mouse to the bus 228.

The network interface 227 is a component connecting the bus 228 to the LAN 5.

The hardware structure of the management server 4 according to the first embodiment is an only example. The management server 4 is not limited to the above structure as long as the management server 4 includes an interface to the LAN 5 and is capable of executing software described below.

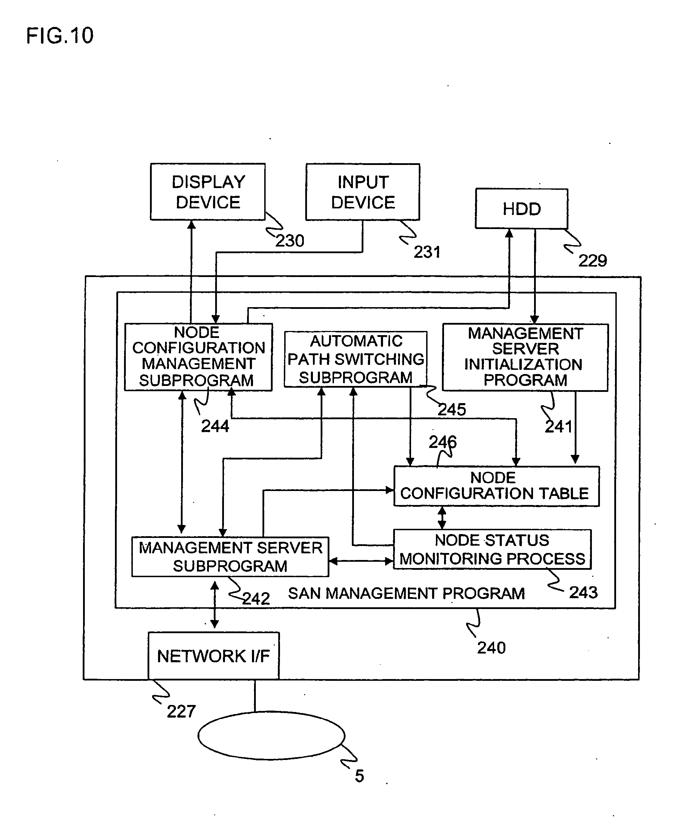

Fig. 10 shows an exemplary software configuration of the management server 4. A process performed by the CPU 220 in the management server 4 and data held in the main memory 221 will now be described.

The CPU 220 in the management server 4 executes a SAN management program 240.

The SAN management program 240 includes a management server initialization program 241, a management server subprogram (module) 242, a node status monitoring process 243, a node configuration management subprogram (module) 244, and an automatic path switching subprogram (module) 245.

The main memory 221 in the management server 4 holds data used by the SAN management program 240. Specifically, the main memory 221 holds a node configuration table 246.

The node configuration table 246 is a table holding the configuration information concerning the storage system 1 and the host 2 described above. Backup data of the configuration information is stored in the HDD 229.

First, the management server initialization program 241 will now be described. After the management server 4 is invoked, the CPU 220 loads the SAN management program 240 from the HDD 229, invokes the SAN management program 240, and executes the management server initialization program 241.

In the management server initialization program 241, the CPU 220 first loads backup data of the node configuration table 246 from the HDD 229 and initializes the node configuration table 246. In addition, the CPU 220 invokes the management server subprogram 242. Specifically, the CPU 220 initializes the network interface 227 to make the management server subprogram 242 wait for login from the storage system 1 or the host 2.

Next, the node status monitoring process 243 in the management server 4 will now be described. The CPU 220 invokes the node status monitoring process 243 at predetermined intervals. Specifically, the CPU 220 refers to the node configuration table 246 to determine nodes that are logging in. The CPU 220, then, accesses the nodes via the network interface 227, acquires the current configuration information, and registers the acquired information in the node configuration table 246.

In the acquisition of the configuration information, the CPU 220 may first query the nodes as to the presence of a change in the configuration information to save the bandwidth or processing overhead of the LAN 5, for example, to acquire only the configuration information that has changed.

Next, the node configuration management subprogram 244 in the management server 4 will now be described. The node configuration management subprogram 244 provides the following two functions to a SAN manager.

The first function of the node configuration management subprogram 244 is a function of displaying the configuration. The CPU 220 displays the node configuration table 246 in the display device 230 to allow the SAN manager to confirm the current operation status of the node.

The second function of the node configuration management subprogram 244 is a function of changing the configuration. The CPU 220 changes the node configuration table 246 in accordance with an input from the SAN manager with the node configuration table 246 being displayed in the display device 230. Furthermore, the CPU 220 invokes the management server subprogram 242 to reflect the change in the configuration in the node information 192 and the node information 131 held by each node via the network interface 227. The CPU 220 also stores the change in the node configuration table 246 in the HDD 229.

Finally, the automatic path switching subprogram 245 in the management server 4 will now be described. The automatic path switching subprogram 245 is invoked by the management server subprogram 242 that receives a notification of an error of the access path from the host 2.

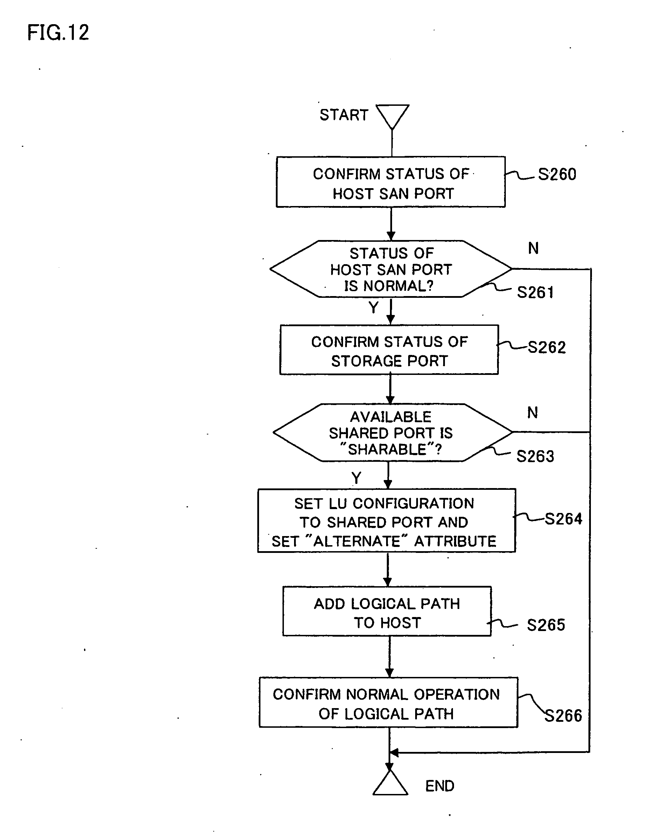

In the automatic path switching subprogram 245, the CPU 220 sets a new access path to the logical volume 6 in the host 2 and the storage system 1 by using the sharable SAN port 8 of the storage system 1 to recover the access path. The process in the automatic path switching subprogram 245 will be described in detail below with reference to Fig. 12.

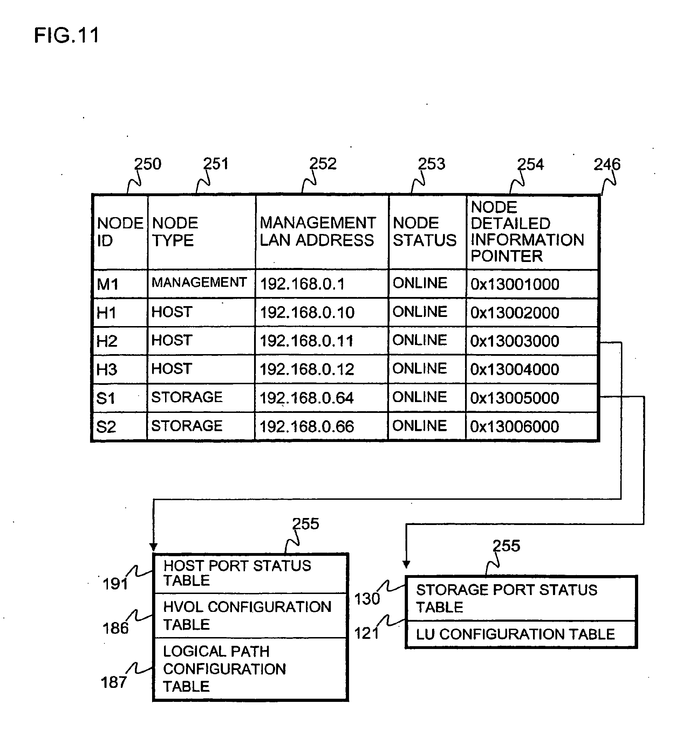

Fig. 11 shows an exemplary structure of the node configuration table 246. The node configuration table 246 has a plurality of entries corresponding to the nodes. Each entry has a node ID 250, a node type 251, a manager LAN address 252, a node status 253, and a node detailed information pointer 254.

The node ID 250 is an ID used by the management server 4 that identifies the node, the node type 251 indicates a type of the node, and the manager LAN address 252 indicates a LAN address of the node via the network interface 167 or the network interface 227, which are input by the SAN manager through the node configuration management subprogram 244 and are backed up in the HDD 229.

The node status 253 indicates whether the node is logging in the management server 4 and is updated to the current status in the management server subprogram 242 or the node status monitoring process 243.

The node detailed information pointer 254 is a pointer indicating an area address of the main memory 221 holding detailed information in accordance with the node type.

Node detailed information 255 holds the storage port status table 130 and the LU configuration table 121 when the node type 251 is "storage", and holds the host port status table 191, the HVOL configuration table 186, and the logical path configuration table 187 when the node type 251 is "host".

Fig. 12 shows a process flow of the automatic path switching subprogram 245 according to the first embodiment of the present invention.

When the CPU 220 receives a notification of an error of the access path from the host 2, the CPU 220 invokes the management server subprogram 242 and, then, invokes the automatic path switching subprogram 245. The CPU 220 may invoke the management server subprogram (module) 242 and, then, may invoke the automatic path switching subprogram (module) 245 upon reception of a notification of an error from the storage system 1, instead of the notification of an error from the host 2.

In Step S260, the CPU 220 retrieves the access path where an error has occurred from the node detailed information 255 in the host 2 and searches the host port status table 191 to confirm the status of the SAN port 8 of the host 2. In order to confirm the current status of the SAN port 8, the CPU 220 invokes the management server subprogram 242 to acquire the current status of the SAN port 8 from the host 2.

In Step S261, the CPU 220 determines whether the status of the SAN port 8 of the host 2 is normal. If the status of the SAN port 8 of the host 2 is normal, the CPU 220 proceeds to Step S262 to continue the process. Otherwise, the CPU 220 terminates the process.

In Step S262, the CPU 220 identifies the storage system 1 from the logical path configuration table 187, invokes the management server subprogram 242, and acquires the current storage port status table 130 from the storage system 1.

In Step S263, the CPU 220 determines whether the status of the SAN port 8 of the storage system 1 is abnormal and whether the SAN port 8 (that is, the shared port) specified by the available shared port ID 145 corresponding to the SAN port 8 has the port attribute 143 "sharable". If the CPU 220 determines that the status of the SAN port 8 of the storage system 1 is abnormal and that the SAN port 8 specified by the available shared port ID 145 corresponding to the SAN port 8 has the port attribute 143 "sharable", the CPU 220 proceeds to Step S264 to continue the process. Otherwise, the CPU 220 terminates the process.

In Step S264, the CPU 220 changes the LU configuration information concerning the storage system 1. Specifically, the CPU 220 issues an instruction to copy the information in the LU configuration table 153 corresponding to the SAN port 8 where the error has occurred in the LU configuration table 153 corresponding to the shared port, to the storage system 1 over the LAN 5, and similarly changes the content of the main memory 221. This change permits the access to the logical volume 6, which was accessed through the SAN port 8 where the error has occurred, through the shared port. In addition, the CPU 220 issues an instruction to change the port attribute of the shared port in the storage port status table 130 to "alternate" to the storage system 1 over the LAN 5, and similarly changes the content of the main memory 221.

In Step S265, the CPU 220 adds a new logical path to the logical path configuration table 187 in the host 2 over the LAN 5 to update the HVOL configuration table 186. The new logical path is an access path used for an access from the SAN port 8 of the host 2, which SAN port was used by the host 2 in the access path where the error has occurred, to the logical volume 6 through the shared port set in Step S264.

In Step S266, the CPU 220 completes the process upon reception of a notification indicating that the path status of the added logical path is successfully changed from the host 2. If no notification is received from the host 2 for a predetermined time, the CPU 220 displays an error message in the display device 230.

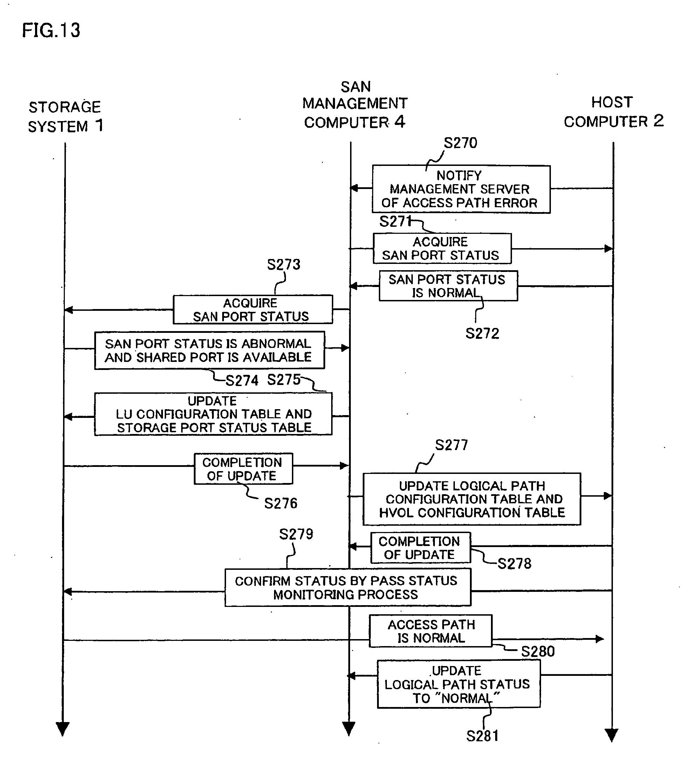

Fig. 13 is a ladder chart showing a process flow of recovering from a path error according to the first embodiment of the present invention. In Step S270, the host 2 detects an error of the access path and notifies the management server 4 of the error over the LAN 5.

In Step S271, the management server 4 acquires the status of the SAN port 8 from the host 2. In Step S272, the management server 4 determines that the status of the SAN port 8 is normal.

In Step S273, the management server 4 accesses the storage system 1 to acquire the status of the SAN port 8 of the storage system 1, used in the access path. In Step S274, the management server 4 determines that the shared port is available.

In Step S275, the management server 4 updates the LU configuration table 121 and the storage port status table 130 in the storage system 1 to set the access path to the logical volume 6, which has made inaccessible due to the error, in the storage system 1. In Step S276, the management server 4 completes the update.

In Step S277, the management server 4 updates the logical path configuration table 187 and the HVOL configuration table 186 in the host 2 to set a new access path to the logical volume 6. In Step S278, the management server 4 completes the update.

In Step S279, the host 2 determines the status of the new access path in the path status management program 185. In Step S280, the host 2 determines that the status of the new access path is normal and notifies the management server 4 of the status. In Step S281, the management server 4 updates the status of the logical path to "normal".

The computer system according to the first embodiment can automatically recover from the error of the access path, caused by the port error of the storage system 1, by using the access path through the shared port in the manner described above.

### Second Embodiment

A second embodiment of the present invention will be described. According to the second embodiment, all the access paths through the normal SAN port 8 of the host interface unit 100 are provided through the shared port during replacement of the host interface unit 100 in order to recover from the port error that has occurred in the first embodiment.

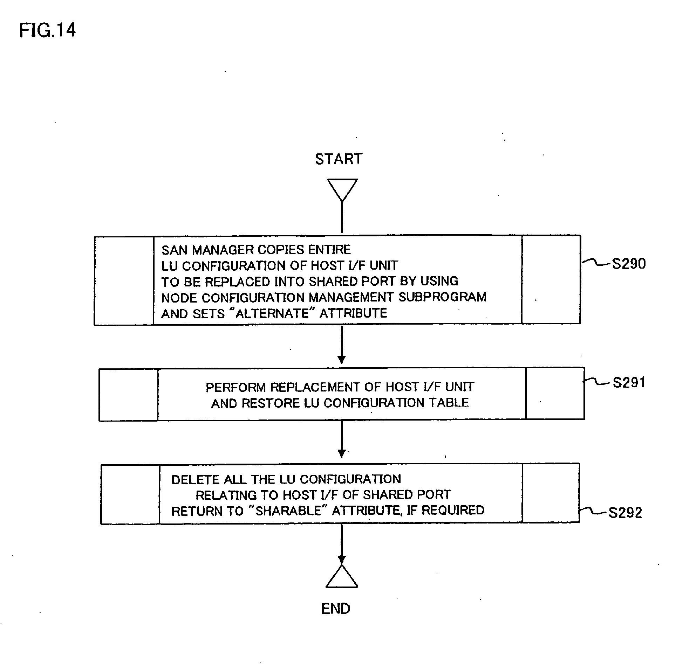

The provision of all the access paths through the shared port is achieved by the SAN manager who changes the settings in the storage system 1 and the host 2 by using the node configuration management subprogram 244 in the management server 4. Fig. 14 is a flowchart showing the operation performed by the SAN manager.

In Step S290, the SAN manager uses the node configuration management subprogram 244 to add the setting of the access path to the logical volume 6 through the SAN port 8 of the host interface unit 100 to be replaced to the shared port of another host interface unit 100. Although the LUN can be duplicated, the SAN manager sets the correspondence between the LUNs and the logical volumes 6 in the LU configuration table 121 while allocating the LUNs so as not to be duplicated. The SAN manager sets the attribute of the shared port to "alternate" and changes the logical path configuration table 187 and the HVOL configuration table 186 in each host 2 accessing the logical volume 6 for which the "alternate" attribute is set to enable the added access path.

This step permits access through the shared port to all the logical volumes 6 provided through the host interface unit 100 to be replaced.

In Step S291, the SAN manager replaces the host interface unit 100 and, then, uses the node configuration management subprogram 244 to recover the LU configuration table 121 in the storage system 1.

This step recovers the host interface unit 100 to the state before the error occurred.

In Step S292, the SAN manager deletes the settings set in the shared port before the replacement of the host interface unit 100. If another logical volume 6 is not set in the shared port, the attribute of the shared port is returned to "sharable".

Replacing the host interface unit 100 in the manner described above allows the host interface unit 100 to be replaced while providing all the access paths that were provided through the normal SAN port 8 of the host interface unit 100 through the shared port.

### Third Embodiment

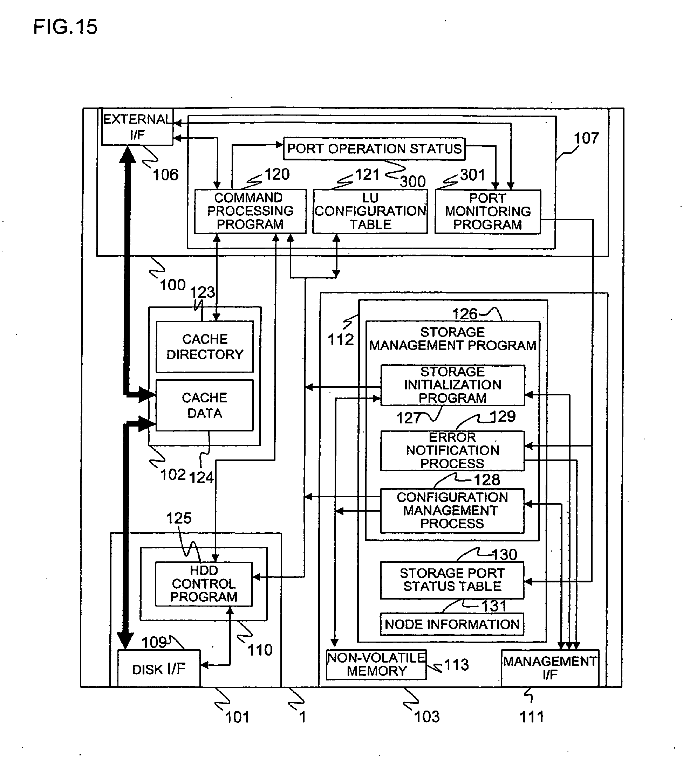

A third embodiment of the present invention will be described. According to the third embodiment, the shared port is used not only in the replacement upon occurrence of a port error but also in the load sharing when the performance overload occurs. Fig. 15 shows an exemplary software configuration of the storage system 1 according to the third embodiment of the present invention.

The software configuration in the third embodiment differs from that in the first embodiment in that the port processor 107 holds a port operation status 300. The port operation status 300 holds the usage of the SAN port 8 and the port processor 107 and a threshold value used in determination of the overload. Data on the usage of the SAN port 8 and the port processor 10, held in the port operation status 300, is updated by the command processing program 120 that sums up the commands processed by the port processor 107. The threshold value held in the port operation status 300 is set from the node configuration management subprogram 244 in the management server 4 in the storage system 1 over the LAN 5.

A second difference between the third embodiment and the first embodiment is a port monitoring program 301 with which the error detection program 122 is replaced. The port monitoring program 301 has a function of monitoring the port operation status 300 at predetermined intervals and notifying the error notification process 129 of any situation in which the current value exceeds the threshold value, in addition to the function of the error detection program 122.

A third difference between the third embodiment and the first embodiment is the function of the management processor 112. The management processor 112 not only has the function according to the first embodiment but also notifies the management server 4 of the performance overload in the error notification process 129.

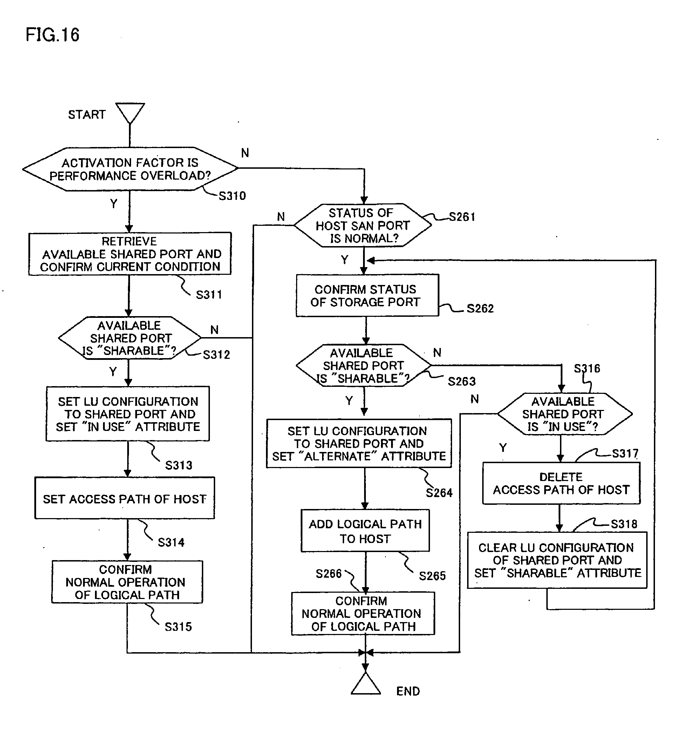

Fig. 16 is a flowchart showing a process flow of the automatic path switching subprogram 245 according to the third embodiment of the present invention.

In Step S310, the CPU 220 determines an invocation factor acquired from the management server subprogram 242. If the invocation factor is the performance overload, the CPU 220 performs the load sharing. Otherwise, the CPU 220 determines that the invocation factor is an occurrence of an error of the access path and performs the error processing.

If the invocation factor is the performance overload, then in Step S311, the CPU 220 confirms a status of the port available in the load sharing. In Step S312, the CPU 220 accesses the LU configuration table 121 of the same storage system 1 to confirm whether the attribute of the SAN port 8 specified by the available shared port ID 145 of the SAN port 8 for which the load sharing is to be performed is "sharable". If the attribute of the SAN port 8 used in the load sharing is "sharable", the CPU 220 proceeds to Step S313 to continue the process. Otherwise, the CPU 220 terminates the process.

In Step S313, the CPU 220 selects one or more logical volumes 6 from the LU configuration table 121 of the overloaded SAN port 8 in the node configuration table 246, and sets the LU configuration table 121 of the storage system 1 such that the SAN port 8 used in the load sharing can access the logical volume 6. In addition, the CPU 220 changes the attribute of the SAN port 8 used in the load sharing to "in use".

The CPU 220 searches the node configuration table 246 for the host 2 that accesses the logical volume 6 set in Step S313 through the overloaded SAN port 8. In Step S314, the CPU 220 adds an access path to the logical volume 6 through the SAN port 8 used in the load sharing to the logical path configuration table 187 of the host 2.

In Step S315, the CPU 220 waits for a notification that the status of the access path added in Step S314 changes to "normal" from the host 2. If no notification is received for a predetermined time, the CPU 220 displays an error message in the display device 230 and terminates the process.

If the invocation factor is a notification of an error, then in Steps S261 to S266, the CPU 220 performs processing basically similar to that of the automatic path switching subprogram 245 in the first embodiment.

However, the processing performed if the attribute of the shared port is not "sharable" in Step S263 is different from that in the first embodiment. If the attribute of the shared port is not "sharable" in Step S263, then in Step S316, the CPU 220 determines whether the attribute of the shared port is "in use". If the attribute of the shared port is not "in use", the CPU 220 terminates the process. Otherwise, the CPU 220 proceeds to Step S317 to continue the process.

Since the SAN port 8 is used for the load sharing, the CPU 220 changes the setting so as to cancel the setting of the load sharing for the SAN port 8 and to use the SAN port 8 as the alternate port. Specifically, the CPU 220 searches the node configuration table 246 for the host 2 accessing the SAN port 8 and, in Step S317, deletes the setting of the access path through the SAN port 8 from the logical path configuration table 187 of the host 2.

In Step S318, the CPU 220 changes the attribute of the shared port of the storage system 1 from "in use" to "sharable" and goes back to Step S262.

It is possible to normally use the shared port, which is not used unless an error occurs in the first embodiment, in the load sharing with the automatic path switching subprogram 245 described above.

The processing in the management server 4 in the computer system according to the embodiments of the present invention may be performed in the host computer, the storage apparatus, or the SAN switch 3. The storage apparatus may perform the processing in the management server 4 in the computer system over the SAN network. Although the "sharable" attribute and the "alternate" attribute are mutually exclusively set in the above embodiments of the present invention, the "sharable" attribute may overlap the "alternate" attribute of the port. However, in such a case, for example, it is necessary to shift the LAN.

In a computer system according to a fourth embodiment of the present invention, when the management computer receives a notification of a path error from the host computer or the storage apparatus, the management computer instructs that a new access path through the shared port of the storage apparatus is set for the host computer and the storage apparatus to recover from the path error.

In a computer system according to a fifth embodiment of the present invention, when the management computer receives a notification of port overloaded from the host computer or the storage apparatus, the management computer instructs that a new access path through the shared port of the storage apparatus is set for the host computer and the storage apparatus to avoid the port overload.

In a computer system according to a sixth embodiment of the present invention, when the management computer receives a notification of a path error from the host computer or the storage apparatus, the management computer confirms an attribute of the shared port of the storage apparatus, changes the attribute of the shared port used in port overload, and instructs that a new access path through the shared port is set for the host computer and the storage apparatus in order to recover from the path error.

In a computer system according to a seventh embodiment of the present invention, upon replacement of a package of the storage apparatus, the management computer instructs that the path definition of the package is changed to the shared port and the changed path definition is set for the host computer and the storage apparatus.

A management computer according to an eighth embodiment of the present invention is connected to at least one host computer and at least one storage apparatus providing a logical storage area for the host computer over a network to form a computer system. The management computer includes a CPU, a memory controller, a main memory, and an interface for connection. When the management computer receives a notification of a path failure from the host computer or the storage apparatus, the management computer instructs that a new path definition is set for the host computer and the storage apparatus.

In a management computer according to a ninth embodiment of the present invention, when the management computer receives a notification of a path error from the host computer or the storage apparatus, the management computer instructs that a new access path through the shared port of the storage apparatus is set for the host computer and the storage apparatus to recover from the path error.

In a management computer according to a tenth embodiment of the present invention, when the management computer receives a notification of port overloaded from the host computer or the storage apparatus, the management computer instructs that a new access path through the shared port of the storage apparatus is set for the host computer and the storage apparatus to avoid the port overload.

In a management computer according to an eleventh embodiment of the present invention, when the management computer receives a notification of a path error from the host computer or the storage apparatus, the management computer confirms an attribute of the shared port of the storage apparatus, changes the attribute of the shared port used in port overload, and instructs that a new access path through the shared port is set for the host computer and the storage apparatus in order to recover from the path error.

In a management computer according to a twelfth embodiment of the present invention, upon replacement of a package of the storage apparatus, the management computer instructs that the path definition of the package is changed to the shared port and the changed path definition is set for the host computer and the storage apparatus.

In a method of managing an access path, according to a thirteenth embodiment of the present invention, in a computer system including at least one host computer, at least one storage apparatus providing a logical storage area for the host computer, and a management computer connected to the host computer and the storage apparatus over a network, the management computer receives a notification of a path failure from the host computer or the storage apparatus and instructs that a new path definition is set for the host computer and the storage apparatus.

In a method of managing an access path according to a fourteenth embodiment of the present invention, the management computer receives a notification of a path error from the host computer or the storage apparatus and instructs that a new access path through the shared port of the storage apparatus is set for the host computer and the storage apparatus in order to recover from the path error.

In a method of managing an access path according to a fifteenth embodiment of the present invention, the management computer receives a notification of port overloaded from the host computer or the storage apparatus and instructs that a new access path through the shared port of the storage apparatus is set for the host computer and the storage apparatus in order to avoid the port overload.

In a method of managing an access path according to a sixteenth embodiment of the present invention, the management computer receives a notification of a path error from the host computer or the storage apparatus, confirms an attribute of the shared port of the storage apparatus, changes the attribute of the shared port used in port overload, and instructs that a new access path through the shared port is set for the host computer and the storage apparatus in order to recover from the path error.

In a method of managing an access path according to a seventeenth embodiment of the present invention, upon replacement of a package of the storage apparatus, the management computer instructs that the path definition of the package is changed to the shared port and the changed path definition is set for the host computer and the storage apparatus.

It should be understood by those skilled in the art that various modifications, combinations, sub-combinations and alterations may occur depending on design requirements and other factors insofar as they are within the scope of the appended claims.

## Claims

1. A management computer (4) connected to at least one host computer (2) and at least one storage apparatus (1) providing a logical storage area for the host computer over a network (5) to form a computer system, **characterized in that**: when the management computer (4) receives a notification of a performance overload or a port error from the host computer (2) or the storage apparatus (1), the management computer copies the path setting of the failure port into a shared port of the storage system, and instructs that a new path definition is set for the host computer and the storage apparatus, wherein:
when the management computer (4) receives a notification of port overload from the host computer (2) or the storage apparatus (1), the management computer instructs that a new access path through a shared port of the storage apparatus is set for the host computer and the storage apparatus in order to avoid the port overload; and
when the management computer (4) receives a notification of a path error from the host computer (2) or the storage apparatus (1), the management computer confirms an attribute of a shared port of the storage apparatus, changes the attribute of the shared port used in port overload, and instructs that a new access path through the shared port is set for the host computer and the storage apparatus in order to recover from the path error.

2. The management computer (4) according to Claim 1,
wherein, upon replacement of a package of the storage apparatus (1), the management computer instructs that a path definition of the package is changed to a shared port and the changed path definition is set for the host computer (2) and the storage apparatus.

3. The management computer (4) according to any one of Claims 1 to 2, comprising:
a CPU (220);
a memory controller (222);
a main memory (221); and
an interface (227) for connection.

4. A computer system comprising:
at least one host computer (2);
at least one storage apparatus (1) providing a logical storage area for the host computer (2); and
a management computer (4) according to claim 1.

5. The computer system according to Claim 4,
wherein, upon replacement of a package of the storage apparatus (1), the management computer (4) instructs that a path definition of the package is changed to a shared port and the changed path definition is set for the host computer (2) and the storage apparatus.

6. A method of managing an access path in a computer system including at least one host computer (2), at least one storage apparatus (1) providing a logical storage area for the host computer, and a management computer (4) connected to the host computer and the storage apparatus over a network (5), **characterized in that**:
the management computer (4) receives a notification of a performance overload or a port error from the host computer (2) or the storage apparatus (1), copies the path setting of the failure port into a shared port of the storage system, and instructs that a new path definition is set for the host computer and the storage apparatus;
when the management computer (4) receives a notification of port overload from the host computer (2) or the storage apparatus (1), the management computer instructs that a new access path through a shared port of the storage apparatus is set for the host computer and the storage apparatus in order to avoid the port overload; and
when the management computer (4) receives a notification of a path error from the host computer (2) or the storage apparatus (1), the management computer confirms an attribute of a shared port of the storage apparatus, changes the attribute of the shared port used in port overload, and instructs that a new access path through the shared port is set for the host computer and the storage apparatus in order to recover from the path error.

7. The method of managing the access path according to Claim 6,
wherein, upon replacement of a package of the storage apparatus (1), the management computer (4) instructs that a path definition of the package is changed to a shared port and the changed path definition is set for the host computer (2) and the storage apparatus.

## Patentansprüche

1. Verwaltungscomputer (4), der mit mindestens einem Hostcomputer (2) und mindestens einer einen logischen Speicherbereich für den Hostcomputer bereitstellenden Speichervorrichtung (1) über ein Netzwerk (5) verbunden ist, um ein Computersystem zu bilden, **gekennzeichnet dadurch, dass** der Verwaltungscomputer (4), wenn er eine Benachrichtigung über eine Leistungsüberlastung oder einen Portfehler von dem Hostcomputer (2) oder der Speichervorrichtung (1) empfängt, die Pfadeinstellungen des versagenden Ports auf einen geteilten Port des Speichersystems kopiert und veranlasst, dass für den Hostcomputer und die Speichervorrichtung eine neue Pfaddefinition eingestellt wird, wobei:
der Verwaltungscomputer (4), wenn er eine Benachrichtigung über eine Portüberlastung von dem Hostcomputer (2) oder der Speichervorrichtung (1) empfängt, veranlasst, dass für den Hostcomputer und die Speichervorrichtung ein neuer Zugriffspfad durch einen geteilten Port der Speichervorrichtung eingestellt wird, um die Portüberlastung zu vermeiden; und
der Verwaltungscomputer (4), wenn er eine Benachrichtigung über einen Pfadfehler von dem Hostcomputer (2) oder der Speichervorrichtung (1) empfängt, ein Attribut eines geteilten Ports der Speichervorrichtung bestätigt, das Attribut des bei der Portüberlastung verwendeten geteilten Ports ändert und veranlasst, dass ein neuer Zugriffspfad durch den geteilten Port für den Hostcomputer und die Speichervorrichtung eingestellt wird, um den Pfadfehler zu beheben.

2. Verwaltungscomputer (4) nach Anspruch 1,
wobei der Verwaltungscomputer beim Ersatz eines Pakets der Speichervorrichtung (1) veranlasst, dass eine Pfaddefinition des Pakets auf einen geteilten Port geändert wird und die geänderte Pfaddefinition für den Hostcomputer (2) und die Speichervorrichtung eingestellt wird.

3. Verwaltungscomputer (4) nach einem der Ansprüche 1 bis 2, umfassend:
eine CPU (220);
eine Speichersteuerung (222);
einen Hauptspeicher (221); und
eine Schnittstelle (227) zur Verbindung.

4. Computersystem, umfassend:
mindestens einen Hostcomputer (2);
mindestens eine Speichervorrichtung (1), die einen logischen Speicherbereich für den Hostcomputer (2) bereitstellt; und
einen Verwaltungscomputer (4) nach Anspruch 1.

5. Computersystem nach Anspruch 4,
wobei der Verwaltungscomputer (4) beim Ersatz eines Pakets der Speichervorrichtung (1) veranlasst, dass eine Pfaddefinition des Pakets auf einen geteilten Port geändert wird und die geänderte Pfaddefinition für den Hostcomputer (2) und die Speichervorrichtung eingestellt wird.

6. Verfahren zum Verwalten eines Zugriffspfads in einem Computersystem, das mindestens einen Hostcomputer (2), mindestens eine einen logischen Speicherbereich für den Hostcomputer bereitstellende Speichervorrichtung (1) sowie einen mit dem Hostcomputer und der Speichervorrichtung über ein Netzwerk (5) verbundenen Verwaltungscomputer (4) enthält, **gekennzeichnet dadurch, dass**:
der Verwaltungscomputer (4) eine Benachrichtigung über eine Leistungsüberlastung oder einen Portfehler von dem Hostcomputer (2) oder der Speichervorrichtung (1) empfängt, die Pfadeinstellungen des versagenden Ports auf einen geteilten Port des Speichersystems kopiert und veranlasst, dass eine neue Pfaddefinition für den Hostcomputer und die Speichervorrichtung eingestellt wird;
der Verwaltungscomputer (4), wenn er eine Benachrichtigung über eine Portüberlastung von dem Hostcomputer (2) oder der Speichervorrichtung (1) empfängt, veranlasst, dass ein neuer Zugriffspfad über einen geteilten Port der Speichervorrichtung für den Hostcomputer und die Speichervorrichtung eingestellt wird, um die Portüberlastung zu vermeiden; und
der Verwaltungscomputer, wenn er eine Benachrichtigung über einen Pfadfehler von dem Hostcomputer (2) oder der Speichervorrichtung (1) empfängt, das Attribut des bei der Portüberlastung verwendeten geteilten Ports ändert und veranlasst, dass ein neuer Zugriffspfad durch den geteilten Port für den Hostcomputer und die Speichervorrichtung eingestellt wird, um den Pfadfehler zu beheben.

7. Verfahren zum Verwalten des Zugriffspfads nach Anspruch 6,
wobei der Verwaltungscomputer (4) beim Ersatz eines Pakets der Speichervorrichtung (1) veranlasst, dass eine Pfaddefinition des Pakets auf einen geteilten Port geändert wird und die geänderte Pfaddefinition für den Hostcomputer (2) und die Speichervorrichtung eingestellt wird.

## Revendications

1. Ordinateur de gestion (4) connecté à au moins un ordinateur hôte (2) et à au moins un dispositif de mémorisation (1) fournissant une zone de mémorisation logique pour l'ordinateur hôte sur un réseau (5) afin de former un système informatique, **caractérisé en ce que** :
lorsque l'ordinateur de gestion (4) reçoit une notification d'une surcharge de performances ou d'une erreur de port en provenance de l'ordinateur hôte (2) ou du dispositif de mémorisation (1), l'ordinateur de gestion copie le paramétrage de trajet du port défaillant dans un port partagé du système de mémorisation, et ordonne qu'une nouvelle définition de trajet soit définie pour l'ordinateur hôte et le dispositif de mémorisation, dans lequel :
lorsque l'ordinateur de gestion (4) reçoit une notification de surcharge de port en provenance de l'ordinateur hôte (2) ou du dispositif de mémorisation (1), l'ordinateur de gestion ordonne qu'un nouveau trajet d'accès à travers un port partagé du dispositif de mémorisation soit défini pour l'ordinateur hôte et le dispositif de mémorisation afin d'éviter la surcharge de port, et
lorsque l'ordinateur de gestion (4) reçoit une notification d'une erreur de trajet en provenance de l'ordinateur hôte (2) ou du dispositif de mémorisation (1), l'ordinateur de gestion confirme un attribut d'un port partagé du dispositif de mémorisation, change l'attribut du port partagé utilisé dans la surcharge de port, et ordonne qu'un nouveau trajet d'accès à travers le port partagé soit défini pour l'ordinateur hôte et le dispositif de mémorisation afin d'effectuer une récupération à partir de l'erreur de trajet.

2. Ordinateur de gestion (4) selon la revendication 1, dans lequel, lors du remplacement d'un boîtier du dispositif de mémorisation (1), l'ordinateur de gestion ordonne qu'une définition de trajet du boîtier soit changée en un port partagé et que la définition de trajet changée soit définie pour l'ordinateur hôte (2) et le dispositif de mémorisation.

3. Ordinateur de gestion (4) selon l'une quelconque des revendications 1 à 2, comportant :
une unité centrale de traitement (CPU) (220),
un contrôleur de mémoire (222),
une mémoire principale (221), et
une interface (227) pour la connexion.

4. Système informatique comportant :
au moins un ordinateur hôte (2),
au moins un dispositif de mémorisation (1) fournissant une zone de mémorisation logique pour l'ordinateur hôte (2), et
un ordinateur de gestion (4) selon la revendication 1.

5. Système informatique selon la revendication 4,
dans lequel, lors du remplacement d'un boîtier du dispositif de mémorisation (1), l'ordinateur de gestion (1) ordonne qu'une définition de trajet du boîtier soit changée en un port partagé et que la définition de trajet changée soit définie pour l'ordinateur hôte (2) et le dispositif de mémorisation.

6. Procédé de gestion d'un trajet d'accès dans un système informatique incluant au moins un ordinateur hôte (2), au moins un dispositif de mémorisation (1) fournissant une zone de mémorisation logique pour l'ordinateur hôte, et un ordinateur de gestion (4) connecté à l'ordinateur hôte et au dispositif de mémorisation sur un réseau (5), **caractérisé en ce que** :
l'ordinateur de gestion (4) reçoit une notification d'une surcharge de performances ou d'une erreur de port en provenance de l'ordinateur hôte (2) ou du dispositif de mémorisation (1), copie le paramétrage de trajet du port défaillant dans un port partagé du système de mémorisation, et ordonne qu'une nouvelle définition de trajet soit définie pour l'ordinateur hôte et le dispositif de mémorisation,
lorsque l'ordinateur de gestion (4) reçoit une notification de surcharge de port en provenance de l'ordinateur hôte (2) ou du dispositif de mémorisation (1), l'ordinateur de gestion ordonne qu'un nouveau trajet d'accès à travers un port partagé du dispositif de mémorisation soit défini pour l'ordinateur hôte et le dispositif de mémorisation afin d'éviter la surcharge de port, et
lorsque l'ordinateur de gestion (4) reçoit une notification d'une erreur de trajet en provenance de l'ordinateur hôte (2) ou du dispositif de mémorisation (1), l'ordinateur de gestion confirme un attribut d'un port partagé du dispositif de mémorisation, change l'attribut du port partagé utilisé dans la surcharge de port, et ordonne qu'un nouveau trajet d'accès à travers le port partagé soit défini pour l'ordinateur hôte et le dispositif de mémorisation afin d'effectuer une récupération à partir de l'erreur de trajet.

7. Procédé de gestion du trajet d'accès selon la revendication (6),
dans lequel, lors du remplacement d'un boîtier du dispositif de mémorisation (1), l'ordinateur de gestion (4) ordonne qu'une définition de trajet du boîtier soit changée en un port partagé et que la définition de trajet changée soit définie pour l'ordinateur hôte (2) et le dispositif de mémorisation.
